# EUROPEAN PATENT APPLICATION

(11) **EP 4 432 201 A1**
(43) Date of publication of application: **18.09.2024**
(21) Application number: 24164196.8
(22) Date of filing: 18.03.2024
(51) Int. Cl.: G06Q 30/0241, G06Q 30/0251

(54) **CUSTOMIZED IMAGE GENERATION**

(30) Priority: 17.03.2023 US 202318185886
(71) Applicant: T-Mobile USA, Inc., Bellevue, WA 98006-1350 (US)
(72) Inventor: MITCHELL, Michael, Bellevue, 98006 (US); MYRON, Peter P., Bellevue, 98006 (US)
(74) Representative: Suddaby, Mark Edward

(57) **Abstract**

This document describes techniques, apparatuses, and systems for a personalized set of images that are customized to a specific user using his/her likeness. The personalized set of images are presented as a personalized advertisement on a display that is determined to be visible to the user. The personalized set of images can be generated by a telecommunications network operator to which the user is subscribed. An image of the user is retrieved from a user profile associated with the user by the telecommunications network operator. The user's face can be isolated from the image and included within the personalized advertisement. As a result, the personalized advertisement can better appeal to the user, which can increase the effectiveness and palatability of the advertisement.

## Description

### BACKGROUND

Images are used to promote a product or service. Many companies display images for their own products or services on their own website or application. Some companies sell ad-space on their website or application to other companies to allow these other companies to advertise their products and services. Many advertisements are data-driven, which involves processing large amounts of data through a data processing tool to target images/advertisements to a customer. Targeted advertisements can display products or services that the customer is likely to purchase.

### BRIEF DESCRIPTION OF THE DRAWINGS

Detailed descriptions of implementations of the present invention will be described and explained through the use of the accompanying drawings.
Figure 1 illustrates a wireless communications system that can implement aspects of the present technology.
Figure 2 illustrates 5G core network functions (NFs) that can implement aspects of the present technology.
Figure 3 illustrates a personalized advertisement in accordance with aspects of the present technology.
Figure 4 illustrates an example method for presenting a personalized advertisement in accordance with aspects of the present technology.
Figure 5 illustrates an example computer system in which at least some aspects of the present technology can be implemented.

The technologies described herein will become more apparent to those skilled in the art from studying the Detailed Description in conjunction with the drawings. Embodiments or implementations describing aspects of the invention are illustrated by way of example, and the same references can indicate similar elements. While the drawings depict various implementations for the purpose of illustration, those skilled in the art will recognize that alternative implementations can be employed without departing from the principles of the present technologies. Accordingly, while specific implementations are shown in the drawings, the technology is amenable to various modifications.

### DETAILED DESCRIPTION

Images are presented to users in many different settings. Some images are displayed on websites or advertisements during a user's browsing session. For example, the user can see an image of a product or service on their display while browsing a website or running an application on their device. The images can be targeted to the customer to present products or services that are likely to be useful to the customer. Other images are displayed on digital signs that are visible to a user. For example, an advertisement is presented on a display in a retail store in which the user is located. The user then views the advertisement on the display while browsing the store, which can promote products or services available for purchase.

A customer may be more receptive to advertisements when the advertisements showcase how the product would fit into the customer's life. In this way, advertisements are broadly directed to a generic consumer that is likely to purchase the product. Often the generic customer is determined by collecting features shared by a large portion of a sample set of customers. For example, advertisements for long-term care insurance may generally include a larger proportion of older individuals, as these are the primary consumers of long-term care insurance. Given the broad demographics used to create advertisements, specific details related to a particular consumer may go unused when determining the most effective advertisement, thereby reducing the extent to which each advertisement resonates with a particular customer.

To solve these problems and others, the present technology describes techniques, apparatuses, and systems for personalized advertisements that are customized to a specific customer using his/her likeness. For example, the personalized advertisements include the customer's face within the advertisement. The customers face can be isolated from an image associated with the customer's profile. The personalized advertisement can then be created by including the customer's face, which has been isolated from the image, within the personalized advertisement. The personalized advertisement can include a default advertisement with the customer's face replacing a default face within the default advertisement. In other cases, the personalized advertisement can be created from scratch.

To further personalize the advertisement, additional details about the customer can be used to select other characteristics for the personalized advertisement. For example, the additional details can include a favorite hobby or a location of the customer, and the personalized advertisement can include the customer performing that hobby or a landmark associated with that location. As another example, the additional details can include a disability of the customer, and the personalized advertisement can be created to enable the customer to view the advertisement regardless of their disability (e.g., the customer is color blind, so the color scheme of the advertisement is adjusted to be more compatible with the customer's visual impairment).

While many service providers could deploy personalized advertisements, telecommunications network operators are particularly well suited to do so. Telecommunications network operators provide and manage a telecommunications network via which various devices communicate. A user establishes a user account with the telecommunications network operator and connects a wireless device, which is registered to the user, to the telecommunications network. The user account can include details about the user, such as the user's location, age, and photo. In aspects, the user account can be created using the user's social media account, which can be scraped for further details about the user. In some cases, the telecommunications network operator can access operations of the wireless device, which can be combined with the information included in the user account to create a user profile associated with the user. For example, the telecommunications network operator can have access to recent searches on the wireless device, which can be used to determine details about the user (e.g., interests, hobbies, and demographics). Moreover, the telecommunications network operator can determine recent locations of the wireless device where the wireless device performed an operation on the network (e.g., a call, text, or connection to the Internet). The user details and location can be used to further personalize advertisements for the user.

Telecommunications network operators can have numerous applications for personalized advertisements. In some cases, the telecommunications network operator can present personalized advertisements to the user on a website or application associated with the telecommunications network operator. In other cases, the telecommunications network operator can personalize advertisements from other companies and present personalized versions of the advertisements to the user when the advertisements are triggered on a wireless device registered to the user. In yet another aspect, the telecommunications network operator can determine that a wireless device registered to the user is near a display separate from the wireless device, and a personalized advertisement for the user can be presented on the display. As a specific example, the display could include a retail store of the telecommunications network provider, and the personalized advertisement could include an image of the user holding a product sold by the telecommunications network provider while performing their favorite hobby. In general, the personalized advertisements can improve the effectiveness of the advertisements and improve the user's viewing experience.

The description and associated drawings are illustrative examples and are not to be construed as limiting. This disclosure provides certain details for a thorough understanding and enabling description of these examples. One skilled in the relevant technology will understand, however, that the invention can be practiced without many of these details. Likewise, one skilled in the relevant technology will understand that the invention can include well-known structures or features that are not shown or described in detail, to avoid unnecessarily obscuring the descriptions of examples.

### Wireless Communications System

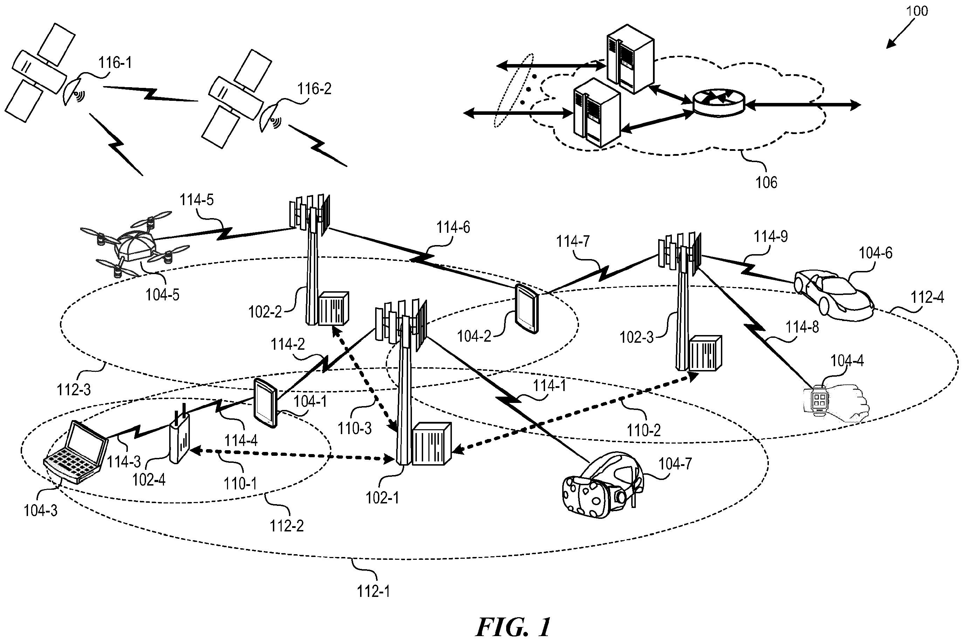

Figure 1 is a block diagram that illustrates a wireless telecommunication network 100 ("network 100") in which aspects of the disclosed technology are incorporated. The network 100 includes base stations 102-1 through 102-4 (also referred to individually as "base station 102" or collectively as "base stations 102"). A base station is a type of network access node (NAN) that can also be referred to as a cell site, a base transceiver station, or a radio base station. The network 100 can include any combination of NANs including an access point, radio transceiver, gNodeB (gNB), NodeB, eNodeB (eNB), Home NodeB or Home eNodeB, or the like. In addition to being a wireless wide area network (WWAN) base station, a NAN can be a wireless local area network (WLAN) access point, such as an Institute of Electrical and Electronics Engineers (IEEE) 802.11 access point.

The NANs of a network 100 formed by the network 100 also include wireless devices 104-1 through 104-7 (referred to individually as "wireless device 104" or collectively as "wireless devices 104") and a core network 106. The wireless devices 104-1 through 104-7 can correspond to or include network 100 entities capable of communication using various connectivity standards. For example, a 5G communication channel can use millimeter wave (mmW) access frequencies of 28 GHz or more. In some implementations, the wireless device 104 can operatively couple to a base station 102 over a long-term evolution/long-term evolution-advanced (LTE/LTE-A) communication channel, which is referred to as a 4G communication channel.

The core network 106 provides, manages, and controls security services, user authentication, access authorization, tracking, internet protocol (IP) connectivity, and other access, routing, or mobility functions. The base stations 102 interface with the core network 106 through a first set of backhaul links (e.g., S1 interfaces) and can perform radio configuration and scheduling for communication with the wireless devices 104 or can operate under the control of a base station controller (not shown). In some examples, the base stations 102 can communicate with each other, either directly or indirectly (e.g., through the core network 106), over a second set of backhaul links 110-1 through 110-3 (e.g., X1 interfaces), which can be wired or wireless communication links.

The base stations 102 can wirelessly communicate with the wireless devices 104 via one or more base station antennas. The cell sites can provide communication coverage for geographic coverage areas 112-1 through 112-4 (also referred to individually as "coverage area 112" or collectively as "coverage areas 112"). The geographic coverage area 112 for a base station 102 can be divided into sectors making up only a portion of the coverage area (not shown). The network 100 can include base stations of different types (e.g., macro and/or small cell base stations). In some implementations, there can be overlapping geographic coverage areas 112 for different service environments (e.g., Internet-of-Things (IoT), mobile broadband (MBB), vehicle-to-everything (V2X), machine-to-machine (M2M), machine-to-everything (M2X), ultra-reliable low-latency communication (URLLC), machine-type communication (MTC), etc.).

The network 100 can include a 5G network 100 and/or an LTE/LTE-A or other network. In an LTE/LTE-A network, the term eNB is used to describe the base stations 102, and in 5G new radio (NR) networks, the term gNBs is used to describe the base stations 102 that can include mmW communications. The network 100 can thus form a heterogeneous network 100 in which different types of base stations provide coverage for various geographic regions. For example, each base station 102 can provide communication coverage for a macro cell, a small cell, and/or other types of cells. As used herein, the term "cell" can relate to a base station, a carrier or component carrier associated with the base station, or a coverage area (e.g., sector) of a carrier or base station, depending on context.

A macro cell generally covers a relatively large geographic area (e.g., several kilometers in radius) and can allow access by wireless devices that have service subscriptions with a telecommunications network service provider. As indicated earlier, a small cell is a lower-powered base station, as compared to a macro cell, and can operate in the same or different (e.g., licensed, unlicensed) frequency bands as macro cells. Examples of small cells include pico cells, femto cells, and micro cells. In general, a pico cell can cover a relatively smaller geographic area and can allow unrestricted access by wireless devices that have service subscriptions with the network 100 provider. A femto cell covers a relatively smaller geographic area (e.g., a home) and can provide restricted access by wireless devices having an association with the femto unit (e.g., wireless devices in a closed subscriber group (CSG), wireless devices for users in the home). A base station can support one or multiple (e.g., two, three, four, and the like) cells (e.g., component carriers). All fixed transceivers noted herein that can provide access to the network 100 are NANs, including small cells.

The communication networks that accommodate various disclosed examples can be packet-based networks that operate according to a layered protocol stack. In the user plane, communications at the bearer or Packet Data Convergence Protocol (PDCP) layer can be IP-based. A Radio Link Control (RLC) layer then performs packet segmentation and reassembly to communicate over logical channels. A Medium Access Control (MAC) layer can perform priority handling and multiplexing of logical channels into transport channels. The MAC layer can also use Hybrid ARQ (HARQ) to provide retransmission at the MAC layer, to improve link efficiency. In the control plane, the Radio Resource Control (RRC) protocol layer provides establishment, configuration, and maintenance of an RRC connection between a wireless device 104 and the base stations 102 or core network 106 supporting radio bearers for the user plane data. At the physical (PHY) layer, the transport channels are mapped to physical channels.

Wireless devices can be integrated with or embedded in other devices. As illustrated, the wireless devices 104 are distributed throughout the system 100, where each wireless device 104 can be stationary or mobile. For example, wireless devices can include handheld mobile devices 104-1 and 104-2 (e.g., smartphones, portable hotspots, tablets, etc.); laptops 104-3; wearables 104-4; drones 104-5; vehicles with wireless connectivity 104-6; head-mounted displays with wireless augmented reality/virtual reality (AR/VR) connectivity 104-7; portable gaming consoles; wireless routers, gateways, modems, and other fixed-wireless access devices; wirelessly connected sensors that provide data to a remote server over a network; loT devices such as wirelessly connected smart home appliances, etc.

A wireless device (e.g., wireless devices 104-1, 104-2, 104-3, 104-4, 104-5, 104-6, and 104-7) can be referred to as a user equipment (UE), a customer premise equipment (CPE), a mobile station, a subscriber station, a mobile unit, a subscriber unit, a wireless unit, a remote unit, a handheld mobile device, a remote device, a mobile subscriber station, terminal equipment, an access terminal, a mobile terminal, a wireless terminal, a remote terminal, a handset, a mobile client, a client, or the like.

A wireless device can communicate with various types of base stations and network 100 equipment at the edge of a network 100, including macro eNBs/gNBs, small cell eNBs/gNBs, relay base stations, and the like. A wireless device can also communicate with other wireless devices either within or outside the same coverage area of a base station via device-to-device (D2D) communications.

The communication links 114-1 through 114-9 (also referred to individually as "communication link 114" or collectively as "communication links 114") shown in network 100 include uplink (UL) transmissions from a wireless device 104 to a base station 102, and/or downlink (DL) transmissions from a base station 102 to a wireless device 104. The downlink transmissions can also be called forward link transmissions, while the uplink transmissions can also be called reverse link transmissions. Each communication link 114 includes one or more carriers, where each carrier can be a signal composed of multiple subcarriers (e.g., waveform signals of different frequencies) modulated according to the various radio technologies. Each modulated signal can be sent on a different subcarrier and carry control information (e.g., reference signals, control channels), overhead information, user data, etc. The communication links 114 can transmit bidirectional communications using frequency division duplex (FDD) (e.g., using paired spectrum resources) or Time division duplex (TDD) operation (e.g., using unpaired spectrum resources). In some implementations, the communication links 114 include LTE and/or mmW communication links.

In some implementations of the network 100, the base stations 102 and/or the wireless devices 104 include multiple antennas for employing antenna diversity schemes to improve communication quality and reliability between base stations 102 and wireless devices 104. Additionally or alternatively, the base stations 102 and/or the wireless devices 104 can employ multiple-input, multiple-output (MIMO) techniques that can take advantage of multi-path environments to transmit multiple spatial layers carrying the same or different coded data.

In some examples, the network 100 implements 6G technologies including increased densification or diversification of network nodes. The network 100 can enable terrestrial and non-terrestrial transmissions. In this context, a Non-Terrestrial Network (NTN) is enabled by one or more satellites such as satellites 116-1 and 116-2 to deliver services anywhere and anytime, and provide coverage in areas that are unreachable by any conventional Terrestrial Network (TN). A 6G implementation of the network 100 can support terahertz (THz) communications. This can support wireless applications that demand ultra-high quality of service requirements and multi-terabits per second data transmission in the 6G and beyond era, such as terabit-per-second backhaul systems, ultra-high definition content streaming among mobile devices, AR/VR, and wireless high-bandwidth secure communications. In another example of 6G, the network 100 can implement a converged Radio Access Network (RAN) and core architecture to achieve Control and User Plane Separation (CUPS) and achieve extremely low user plane latency. In yet another example of 6G, the network 100 can implement a converged Wi-Fi and core architecture to increase and improve indoor coverage.

### 5G Core Network Functions

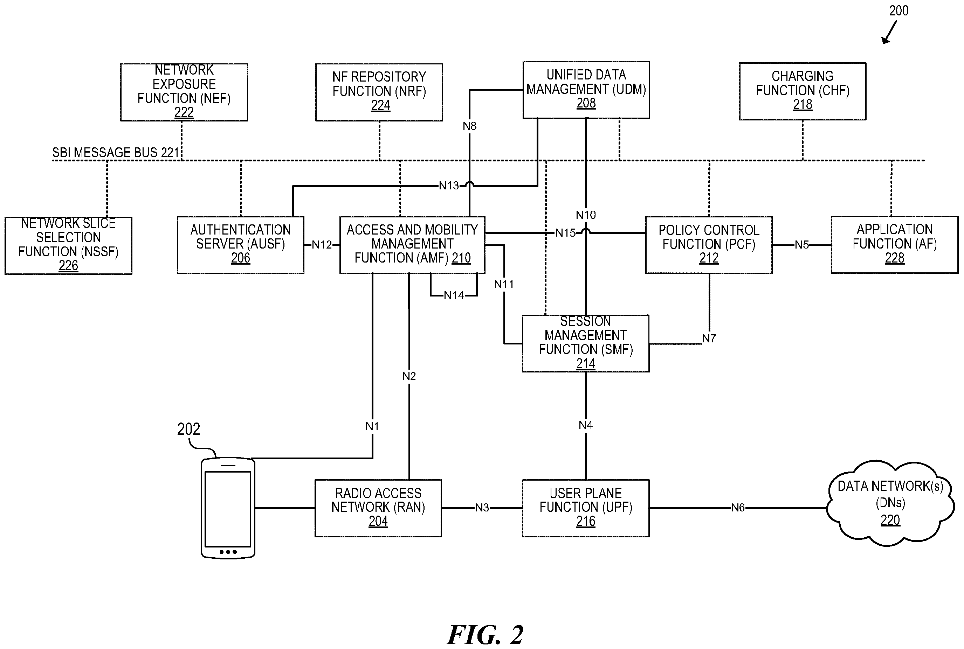

Figure 2 is a block diagram that illustrates an architecture 200 including 5G core network functions NFs that can implement aspects of the present technology. A wireless device 202 can access the 5G network through a NAN (e.g., gNB) of a RAN 204. The NFs include an Authentication Server Function (AUSF) 206, a Unified Data Management (UDM) 208, an Access and Mobility management Function (AMF) 210, a Policy Control Function (PCF) 212, a Session Management Function (SMF) 214, a User Plane Function (UPF) 216, and a Charging Function (CHF) 218.

The interfaces N1 through N15 define communications and/or protocols between each NF as described in relevant standards. The UPF 216 is part of the user plane and the AMF 210, SMF 214, PCF 212, AUSF 206, and UDM 208 are part of the control plane. One or more UPFs can connect with one or more data networks (DNs) 220. The UPF 216 can be deployed separately from control plane functions. The NFs of the control plane are modularized such that they can be scaled independently. As shown, each NF service exposes its functionality in a Service Based Architecture (SBA) through a Service Based Interface (SBI) 221 that uses HTTP/2. The SBA can include a Network Exposure Function (NEF) 222, a NF Repository Function (NRF) 224 a Network Slice Selection Function (NSSF) 226, and other functions such as a Service Communication Proxy (SCP).

The SBA can provide a complete service mesh with service discovery, load balancing, encryption, authentication, and authorization for interservice communications. The SBA employs a centralized discovery framework that leverages the NRF 224, which maintains a record of available NF instances and supported services. The NRF 224 allows other NF instances to subscribe and be notified of registrations from NF instances of a given type. The NRF 224 supports service discovery by receipt of discovery requests from NF instances and, in response, details which NF instances support specific services.

The NSSF 226 enables network slicing, which is a capability of 5G to bring a high degree of deployment flexibility and efficient resource utilization when deploying diverse network services and applications. A logical end-to-end (E2E) network slice has predetermined capabilities, traffic characteristics, service-level agreements, and includes the virtualized resources required to service the needs of a Mobile Virtual Network Operator (MVNO) or group of subscribers, including a dedicated UPF, SMF, and PCF. The wireless device 202 is associated with one or more network slices, which all use the same AMF. A Single Network Slice Selection Assistance Information (S-NSSAI) function operates to identify a network slice. Slice selection is triggered by the AMF, which receives a wireless device registration request. In response, the AMF retrieves permitted network slices from the UDM 208 and then requests an appropriate network slice of the NSSF 226.

The UDM 208 introduces a User Data Convergence (UDC) that separates a User Data Repository (UDR) for storing and managing subscriber information. As such, the UDM 208 can employ the UDC under 3GPP TS 22.101 to support a layered architecture that separates user data from application logic. The UDM 208 can include a stateful message store to hold information in local memory or can be stateless and store information externally in a database of the UDR. The stored data can include profile data for subscribers and/or other data that can be used for authentication purposes. Given a large number of wireless devices that can connect to a 5G network, the UDM 208 can contain voluminous amounts of data that is accessed for authentication. Thus, the UDM 208 is analogous to a Home Subscriber Server (HSS), to provide authentication credentials while being employed by the AMF 210 and SMF 214 to retrieve subscriber data and context.

The PCF 212 can connect with one or more application functions (AFs) 228. The PCF 212 supports a unified policy framework within the 5G infrastructure for governing network behavior. The PCF 212 accesses the subscription information required to make policy decisions from the UDM 208, and then provides the appropriate policy rules to the control plane functions so that they can enforce them. The SCP (not shown) provides a highly distributed multi-access edge compute cloud environment and a single point of entry for a cluster of network functions, once they have been successfully discovered by the NRF 224. This allows the SCP to become the delegated discovery point in a datacenter, offloading the NRF 224 from distributed service meshes that make up a network operator's infrastructure. Together with the NRF 224, the SCP forms the hierarchical 5G service mesh.

The AMF 210 receives requests and handles connection and mobility management while forwarding session management requirements over the N11 interface to the SMF 214. The AMF 210 determines that the SMF 214 is best suited to handle the connection request by querying the NRF 224. That interface and the N11 interface between the AMF 210 and the SMF 214 assigned by the NRF 224, use the SBI 221. During session establishment or modification, the SMF 214 also interacts with the PCF 212 over the N7 interface and the subscriber profile information stored within the UDM 208. Employing the SBI 221, the PCF 212 provides the foundation of the policy framework which, along with the more typical QoS and charging rules, includes Network Slice selection, which is regulated by the NSSF 226.

### Personalized Advertisements

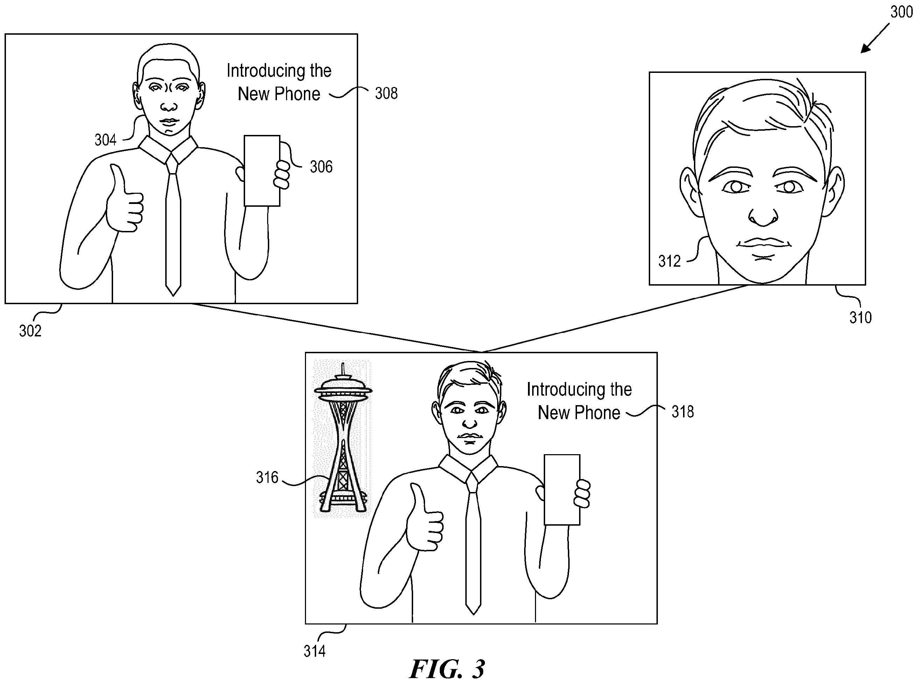

Figure 3 illustrates a personalized advertisement in accordance with aspects of the present technology. A generic advertisement 302 is illustrated in Figure 3. The generic advertisement 302 can be an advertisement displayed to customers without personalization based on the unique individual characteristics of each of the customers. The generic advertisement 302 includes a generic user 304. The generic user 304 can have a face that is generic to the individual customer to which the advertisement is shown. In some cases, the generic user 304 is participating in an activity that is generic to a preferred activity or hobby of the individual customer to which the advertisement is shown. The generic advertisement 302 includes a phone 306, which represents the product being promoted by the generic advertisement 302. The generic advertisement 302 further includes text 308. The text 308 can indicate information regarding the product being promoted (e.g., the phone 306). In some cases, the generic advertisement 302 can further include a background that is generic to the individual customer to which the advertisement is shown. For example, the background can include buildings or an environment that is not presented based on the user's unique information.

An image 310 (e.g., multiple images or a video) of a user to which the generic advertisement is to be presented can be retrieved from a user profile associated with the user. In aspects, the user profile can include information collected from a user account associated with the user by a telecommunications network provider to which the user is subscribed. For example, the user account can correspond to a payment account set up by the user with the telecommunications network provider. The image 310 can be a profile picture associated with the user account. In other aspects, image 310 can be an image collected by the telecommunications network operator (e.g., an in-store capture at a retail store of the telecommunications network provider or an image submitted through a contest held by the telecommunications network provider). In yet other aspects, the image 310 can be scraped from a social media profile associated with the user (e.g., or the user account). For example, the user can utilize their social media profile to set up the user account with the telecommunications network provider, which associates the social media profile with the user account. Alternatively, the social media profile can be associated with the user account because the user logged in to the social media profile on a wireless device registered to the user and connected to a telecommunications network that is provided by the telecommunications network operator.

The image 310 can include a headshot of the user. In other cases, the image can include a full-body image of the user. The user's face 312 can be isolated from the image 310 (e.g., using machine learning). For example, the background of the image 310 or the body of the user can be masked leaving only the user's face 312. In some cases, multiple images of the user can be retrieved, and the user's face can be isolated from each of the images. The various captures of the user's face can then be combined to create the user's face 312. In aspects, the multiple images can include different configurations or orientations of the user's face. In this way, a more complete model of the user's face 312 can be created from the different images to enable the user's face 312 to be integrated more naturally within advertisements with different orientations. In yet other aspects, the user's face 312 can instead be replaced with the user's likeness. For example, a face can be generated or selected from a predetermined set of faces to match (e.g., based on identified features) the user's face 312. In this way, the user's likeness may not include an exact image of the user but instead a likeness with similar features to those of the user.

The user's face 312 can then be included within a personalized advertisement 314 to be presented to the user. For example, the face of the generic user 304 from the generic advertisement 302 can be replaced with the user's face 312. In aspects, the generic face can be replaced with the user's face using machine learning. In some implementations, the entire user can be isolated from the image 310 and the generic user 304 can be replaced with the entire user in the personalized advertisement 314. In general, the personalized advertisement 314 can include the user's face 312 alongside the advertised product or service (e.g., phone 306).

Additional information about the user can be collected from the user profile. For example, the user's location, hobbies, interests, profession, or other information can be determined from the user profile. In some cases, the information can be determined from recent searches of the user using a wireless device registered to the user, which the telecommunications network operator can have access to. The recent searches can be analyzed to determine information about the user (e.g., interests, hobbies, profession, or location). In aspects, recent operations of the wireless device on the telecommunications network can be used to determine the location of the user (e.g., based on the location of a base station used to perform the operation or an internet protocol (IP) address associated with the operation). In yet other aspects, the information can be collected from the user account with the telecommunications network operator, or an additional account associated with the user account.

The personalized advertisement 314 can further include physical characteristics associated with the additional information collected about the user. For example, the personalized advertisement 314 can include a landmark or environment associated with the location of the user. As illustrated, the personalized advertisement 314 includes the Space Needle 316 because the user is located in Seattle, Washington. As another example, if the user is located in an urban environment, the background can include a cityscape. Alternatively, if the user is located in a rural environment, the background can include a farm and rolling hills.

The personalized advertisement 314 can include a hobby or profession of the user being performed. Similarly, the person in the personalized advertisement 314 can be dressed appropriate for the hobby or profession. For example, if the user information demonstrated that the user enjoys biking, the personalized advertisement 314 can include a person (e.g., with the user's face 312) biking or dressed in a cycling suit. Similarly, if the information indicates that the user is a lawyer, the person in the personalized advertisement 314 can be in a courtroom or dressed in a suit.

In some embodiments, the information can indicate that the user has a disability. As a result, the personalized advertisement 314 can include physical characteristics that, mindful of the disability, make the advertisement more palatable to the user. For example, the information can indicate the user has a visual impairment (e.g., the user is legally blind). Accordingly, text 318 within the personalized advertisement 314 can be enlarged (e.g., text 318 is larger than the text 318 of the default advertisement). In yet another example, the information can indicate that the user is color blind, and the personalized advertisement 314 can have a color scheme that is mindful of the user's color blindness. In some cases, the personalized advertisement 314 can include physical characteristics that abide by one or more settings or preferences of the user (e.g., from the user profile). For example, the personalized advertisement 314 can use a preferred color scheme or have increased text size based on the user's settings or preferences.

Although the personalized advertisement 314 is illustrated and described as being created through alterations to the generic advertisement 302, in other implementations, a personalized advertisement can be created from scratch without relying on a generic advertisement. For example, an advertisement for a product (e.g., the phone 306) or service can be created based on the information about the user (e.g., location, interests, hobbies, profession, age, or disabilities). As a specific example, the user's information includes the user picture and indicates that the user lives in Denver, Colorado and enjoys skiing. Thus, a personalized advertisement promoting the newest generation phone can be generated that includes a person with the user's face wearing a ski coat in Vail, Colorado while holding the phone.

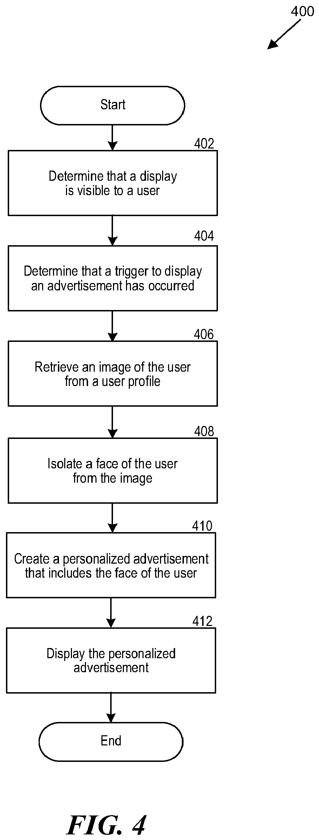

Figure 4 illustrates an example method 400 for presenting a personalized advertisement in accordance with aspects of the present technology. In aspects, the method 400 is performed by a system within a telecommunications network provided by a telecommunications network operator. For example, the method 400 can be performed at a Serving Gateway or Packet Data Network Gateway. In other implementations, the method 400 can be performed on-device (e.g., on a wireless device connected to the telecommunications network or on a display in which the advertisement is presented) through communication with the telecommunications network operator.

At 402, a display is determined to be visible to a user. The user can be subscribed to the telecommunications network operator. The display can be determined to be visible to the user through any number of techniques. For example, the display can be the display of a device (e.g., a phone, a laptop, tablet, or other computing device not registered with the telecommunications network provider) used to browse a website or run an application associated with the telecommunications network operator. The user can have a user account associated with the telecommunications network operator, which the user logs in to on the device (e.g., the device is authenticated). Accordingly, the display can be determined to be visible to the user based on the user being logged in to their account on the device. In some cases, the user is automatically logged into their account. For example, by visiting the website or running the application on a device that was previously logged in to their account.

In other aspects, the display can be a display of a wireless device (e.g., a mobile phone) registered to the user by the telecommunications network operator. For example, the wireless device can have an international mobile subscriber identity (IMSI) that the telecommunications network operator has associated with the user or user account. The wireless device can be used to perform an operation (e.g., make a call, send a text, open an application, or access the Internet). Accordingly, the display can be determined to be visible to the user.

In yet other aspects, the display can be a display entirely separate from the wireless device that is registered to the user by the telecommunications network operator. For instance, the display can include a digital display within a retail store or a digital billboard (e.g., a digital billboard at an entertainment event). In some cases, the display can be a display within a retail store of the telecommunications network operator. The display can be determined to be visible to the user when the wireless device that is registered to the user is proximate to the display (e.g., within a threshold distance). For example, if the wireless device is determined to be in a same retail store as the display, the display can be determined to be visible to the user. Similarly, if the user is determined, based on the location of their wireless device, to be at an entertainment event hosted at the same arena in which the display is located, the display can be determined to be visible to the user.

The location of the wireless device can be determined in any number of ways. For instance, the telecommunications network operator can monitor any operation performed by a wireless device registered therewith. Many operations can be associated with a particular location, which can be determined by the telecommunications network operator. For example, the telecommunications network operator can determine which base station was used to facilitate a recent operation performed by the wireless device, and based on the location of the base station, determine the approximate location of the wireless device. Alternatively or additionally, the telecommunications network operator can determine the IP address associated with a recent communication session of the wireless, which can provide information on the relative location of the wireless device. In some implementations, the location of the wireless device can be determined based on a near-field communication (NFC). For example, a retail store (e.g., of the telecommunications network operator) or event center can include an NFC device that communicated with the wireless device when the wireless devices are proximate. Thus, when the wireless device enters the retail store or event center, the location of the wireless device can be determined.

At 404, it is determined that a trigger to display an advertisement has occurred. In aspects, the trigger to display an advertisement can include the user navigating to a particular web page/application or a particular portion of the web page/application. The trigger can include a time limit being reached that dictates the maximum time between advertisements. In some cases, the trigger can be for a particular advertisement or product. For example, the trigger can cause a user-generic advertisement for the particular product to be received. The advertisement can then be personalized for the particular user. In other cases, a pool of the possible advertisements can be determined, and personalized advertisements based on the specific user can be created for one or more of the possible advertisements prior to the occurrence of the trigger. In yet another aspects, the personalized advertisement can be created from scratch prior to or responsive to the occurrence of the trigger.

At 406, an image of the user is retrieved from a user profile associated with the user. The user profile can include information about the user collected from the user's user account with the telecommunications network operator and any information associated with the user account. For example, the user profile can include information from the user's social media account that was used to create the user account with the telecommunications network operator or that was logged in to on a wireless device registered with the telecommunications network operator. The user profile can include any information accessible to the telecommunications network operator. For instance, the user profile can include recent activity (e.g., Internet searches, applications run, calls made, or texts sent) by the user on a wireless device registered with the telecommunications network provider or while logged into the user account. The image can be retrieved from the user profile through any source accessible to the telecommunications network provider. As specific examples, the image can be a profile photo on the user account, a photo from the user's social media account, or a photo collected by the telecommunications network operator (e.g., at a retail store or through a drawing or other event) and stored in the user profile.

In some implementations, other information can also be collected about the user, which can be used to further personalize the advertisement. The information can include any information about the user based on the user profile. For example, the information can include the user's interests, hobbies, profession, or location. In some cases, the information can include demographics about the user. Some or all of the information about the user can be determined by analyzing data within the user profile. For example, recent operations (e.g., recent Internet searches) by the user on a wireless device or user account associated with the telecommunications network operator can be analyzed to determine information about the user.

At 408, the user's face is isolated from the image. For example, the portion of the image not containing the user's face can be masked, leaving only the user's face. In aspects, the user's face can be isolated using machine learning. In some implementations, the user's face can be isolated from multiple images, and the various captures of the user's face can be combined to create a more comprehensive capture of the user's face.

At 410, a personalized advertisement that includes the user's face is created. In aspects, the personalized advertisement can be an altered version of a generic advertisement. Alternatively, the personalized advertisement can be created from scratch using the user's face or other information about the user. As discussed with respect to Figure 3, the personalized advertisement can include the product or service being promoted and the user's face or other characteristics associated with information about the user.

In some implementations, the advertisement is an advertisement associated with a product or service sold by the telecommunications network operator. For example, the advertisement can promote a next generation of smartphone. The advertisement can be displayed on any platform. As a specific example, the advertisement can be displayed on a website or application associated with the telecommunications network operator. The telecommunications network operator can have control over advertisements presented on their own website or application. Accordingly, the telecommunications network operator can personalize advertisements when the user viewing the advertisements can be determined.

In other cases, the advertisement can promote a product or service of the telecommunications network operator but be presented on a different entity's website or application (e.g., a website/application for a media outlet). In this case, the telecommunications network operator can have access to the advertisements because a wireless device registered with the telecommunications network operator is being used to view the advertisement. Accordingly, the telecommunications network operator can intercept the advertisements so that personalized advertisements can be presented in lieu of a generic advertisement. Alternatively or additionally, the entity hosting the advertisement (e.g., the entity associated with the website or application or a company providing the search engine used to access the website or application) can alert the telecommunications network operator that the advertisement is triggered and request a personalized advertisement based on the particular user. The telecommunications network operator can then provide a personalized advertisement to the advertiser based on the particular user (e.g., the IMSI associated with the communication session).

Similar services could be provided for advertisements for products or services of other entities that are not the telecommunications network operator (e.g., on the telecommunications network operator's website/application or on other websites/applications accessed through a wireless device registered with the telecommunications network operator). For example, the telecommunications network operator could agree to provide personalized advertisements for a set of entities. When an advertisement is triggered, the telecommunications network operator can determine if the advertisement is for an entity with which the telecommunications network operator has agreed to provide personalized advertisements. As a specific example, the telecommunications network operator can determine if the advertisement is triggered from a session having an IP address associated with an entity with which the telecommunications network operator has agreed to provide personalized advertisements. If so, the telecommunications network operator can personalize the generic advertisement or create a new, personalized advertisement for the product or service.

At 412, the personalized advertisement is displayed on the display on which the advertisement was triggered. As discussed, the display can include a display of a wireless device registered with the telecommunications network operator, a display of a device that has been logged in to a user account with the telecommunications network operator, or a separate display proximate to a wireless device registered with the telecommunications network operator.

### Computer System

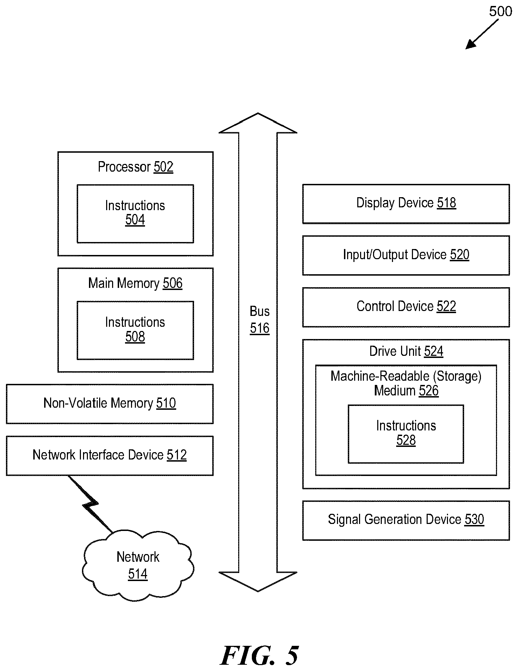

Figure 5 is a block diagram that illustrates an example of a computer system 500 in which at least some operations described herein can be implemented. As shown, the computer system 500 can include: one or more processors 502, main memory 506, non-volatile memory 510, a network interface device 512, video display device 518, an input/output device 520, a control device 522 (e.g., keyboard and pointing device), a drive unit 524 that includes a storage medium 526, which stores instructions 528 to be executed by the one or more processors 502, and a signal generation device 530 that are communicatively connected to a bus 516. The bus 516 represents one or more physical buses and/or point-to-point connections that are connected by appropriate bridges, adapters, or controllers. Various common components (e.g., cache memory) are omitted from Figure 5 for brevity. Instead, the computer system 500 is intended to illustrate a hardware device on which components illustrated or described relative to the examples of the figures and any other components described in this specification can be implemented.

The computer system 500 can take any suitable physical form. For example, the computing system 500 can share a similar architecture as that of a server computer, personal computer (PC), tablet computer, mobile telephone, game console, music player, wearable electronic device, network-connected ("smart") device (e.g., a television or home assistant device), AR/VR systems (e.g., head-mounted display), or any electronic device capable of executing a set of instructions that specify action(s) to be taken by the computing system 500. In some implementations, the computer system 500 can be an embedded computer system, a system-on-chip (SOC), a single-board computer system (SBC) or a distributed system, such as a mesh of computer systems, or include one or more cloud components in one or more networks. Where appropriate, one or more computer systems 500 can perform operations in real time, near real time, or in batch mode.

The network interface device 512 enables the computing system 500 to mediate data in a network 514 with an entity that is external to the computing system 500 through any communication protocol supported by the computing system 500 and the external entity. Examples of the network interface device 512 include a network adaptor card, a wireless network interface card, a router, an access point, a wireless router, a switch, a multilayer switch, a protocol converter, a gateway, a bridge, a bridge router, a hub, a digital media receiver, and/or a repeater, as well as all wireless elements noted herein.

The memory (e.g., main memory 506, non-volatile memory 510, machine-readable medium 526) can be local, remote, or distributed. Although shown as a single medium, the machine-readable medium 526 can include multiple media (e.g., a centralized/distributed database and/or associated caches and servers) that store one or more sets of instructions 528. The machine-readable (storage) medium 526 can include any medium that is capable of storing, encoding, or carrying a set of instructions for execution by the computing system 500. The machine-readable medium 526 can be non-transitory or comprise a non-transitory device. In this context, a non-transitory storage medium can include a device that is tangible, meaning that the device has a concrete physical form, although the device can change its physical state. Thus, for example, non-transitory refers to a device remaining tangible despite this change in state.

Although implementations have been described in the context of fully functioning computing devices, the various examples are capable of being distributed as a program product in a variety of forms. Examples of machine-readable storage media, machine-readable media, or computer-readable media include recordable-type media such as volatile and non-volatile memory devices 510, removable flash memory, hard disk drives, optical disks, and transmission-type media such as digital and analog communication links.

In general, the routines executed to implement examples herein can be implemented as part of an operating system or a specific application, component, program, object, module, or sequence of instructions (collectively referred to as "computer programs"). The computer programs typically comprise one or more instructions (e.g., instructions 504, 508, and 528) set at various times in various memory and storage devices in computing device(s). When read and executed by the processor 502, the instruction(s) cause the computing system 500 to perform operations to execute elements involving the various aspects of the disclosure.

### Remarks

The terms "example", "embodiment," and "implementation" are used interchangeably. For example, references to "one example" or "an example" in the disclosure can be, but not necessarily are, references to the same implementation; and, such references mean at least one of the implementations. The appearances of the phrase "in one example" are not necessarily all referring to the same example, nor are separate or alternative examples mutually exclusive of other examples. A feature, structure, or characteristic described in connection with an example can be included in another example of the disclosure. Moreover, various features are described which can be exhibited by some examples and not by others. Similarly, various requirements are described that can be requirements for some examples but no other examples.

The terminology used herein should be interpreted in its broadest reasonable manner, even though it is being used in conjunction with certain specific examples of the invention. The terms used in the disclosure generally have their ordinary meanings in the relevant technical art, within the context of the disclosure, and in the specific context where each term is used. A recital of alternative language or synonyms does not exclude the use of other synonyms. Special significance should not be placed upon whether or not a term is elaborated or discussed herein. The use of highlighting has no influence on the scope and meaning of a term. Further, it will be appreciated that the same thing can be said in more than one way.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; and the coupling or connection between the elements can be physical, logical, or a combination thereof. Additionally, the words "herein," "above," "below," and words of similar import can refer to this application as a whole and not to any particular portions of this application. Where context permits, words in the above Detailed Description using the singular or plural number may also include the plural or singular number respectively. The word "or" in reference to a list of two or more items covers all of the following interpretations of the word: any of the items in the list, all of the items in the list, and any combination of the items in the list. The term "module" refers broadly to software components, firmware components, and/or hardware components.

While specific examples of technology are described above for illustrative purposes, various equivalent modifications are possible within the scope of the invention, as those skilled in the relevant art will recognize. For example, while processes or blocks are presented in a given order, alternative implementations can perform routines having steps, or employ systems having blocks, in a different order, and some processes or blocks may be deleted, moved, added, subdivided, combined, and/or modified to provide alternative or sub-combinations. Each of these processes or blocks can be implemented in a variety of different ways. Also, while processes or blocks are at times shown as being performed in series, these processes or blocks can instead be performed or implemented in parallel or can be performed at different times. Further, any specific numbers noted herein are only examples such that alternative implementations can employ differing values or ranges.

Details of the disclosed implementations can vary considerably in specific implementations while still being encompassed by the disclosed teachings. As noted above, particular terminology used when describing features or aspects of the invention should not be taken to imply that the terminology is being redefined herein to be restricted to any specific characteristics, features, or aspects of the invention with which that terminology is associated. In general, the terms used in the following claims should not be construed to limit the invention to the specific examples disclosed herein, unless the above Detailed Description explicitly defines such terms. Accordingly, the actual scope of the invention encompasses not only the disclosed examples, but also all equivalent ways of practicing or implementing the invention under the claims. Some alternative implementations can include additional elements to those implementations described above or include fewer elements.

Any patents and applications and other references noted above, and any that may be listed in accompanying filing papers, are incorporated herein by reference in their entireties, except for any subject matter disclaimers or disavowals, and except to the extent that the incorporated material is inconsistent with the express disclosure herein, in which case the language in this disclosure controls. Aspects of the invention can be modified to employ the systems, functions, and concepts of the various references described above to provide yet further implementations of the invention.

To reduce the number of claims, certain implementations are presented below in certain claim forms, but the applicant contemplates various aspects of an invention in other forms. For example, aspects of a claim can be recited in a means-plus-function form or in other forms, such as being embodied in a computer-readable medium. A claim intended to be interpreted as a mean-plus-function claim will use the words "means for." However, the use of the term "for" in any other context is not intended to invoke a similar interpretation. The applicant reserves the right to pursue such additional claim forms in either this application or in a continuing application.

## Claims

1. A method comprising:
determining, by a telecommunications network operator of a telecommunications network to which a user is subscribed, that a display is visible to the user by determining that:
a first device registered to the user by the telecommunications network operator is being used, wherein the first device includes the display,
a second device registered to the user by the telecommunications network operator is proximate to the display, wherein the display is separate from the second device, or
a third device is signed in to a user account associated with the user by the telecommunications network operator, wherein the third device includes the display;
determining that a trigger to display an advertisement has occurred;
retrieving, from a user profile maintained by the telecommunications network operator and associated with the user, an image of the user, wherein the image comprises at least one of:
a first image corresponding to a profile image of the user account,
a second image collected from a social media account associated with the user profile, or
a third image collected by the telecommunications network operator and associated with the user profile;
isolating a face of the user from the image;
creating a personalized advertisement that includes the face of the user that has been isolated from the image; and
displaying the personalized advertisement on the display.

2. The method of claim 1, further comprising retrieving, by the telecommunications network operator and from the user profile, information associated with the user, wherein the personalized advertisement includes a particular visual characteristic based on the information about the user.

3. The method of claim 1, further comprising retrieving, by the telecommunications network operator and from the user profile, a location of the user, wherein the personalized advertisement includes a landmark associated with the location of the user.

4. The method of claim 1, further comprising retrieving, by the telecommunications network operator and from the user profile, an interest of the user, wherein the personalized advertisement includes the user engaging in the interest.

5. The method of claim 1, further comprising retrieving, by the telecommunications network operator and from the user profile, a disability of the user, wherein the personalized advertisement includes visual features that increase user accessibility with regard to the disability.

6. The method of claim 1, wherein determining that the display is visible to the user includes determining that the second device is proximate to the display by:
determining a location of the second device based on recent activity of the second device on the telecommunications network; and
determining that the second device is within a threshold distance of the display.

7. The method of claim 1, wherein:
the trigger to display the advertisement includes the user viewing a website or application associated with the telecommunications network operator on the display; and
the personalized advertisement is displayed on the website or application.

8. The method of claim 1, wherein:
the personalized advertisement is associated with the telecommunications network operator; and
the personalized advertisement includes displaying the advertisement on a website or application associated with an entity other than the telecommunications network operator.

9. The method of claim 1, further comprising receiving a generic advertisement that is generic to the user, wherein creating the personalized advertisement includes replacing a generic face in the generic advertisement with the face of the user that has been isolated from the image.

10. The method of claim 1, wherein:
the telecommunications network operator personalizes advertisements for one or more entities;
the method further comprises determining that the advertisement is associated with one of the one or more entities; and
creating the personalized advertisement is responsive to determining that the advertisement is associated with one of the one or more entities.

11. The method of claim 1, wherein the personalized advertisement is created prior to the determination that the trigger to display the advertisement has occurred.

12. A system comprising:
at least one processor; and
at least one non-transitory computer-readable storage medium storing instructions, which, when executed by the at least one processor, cause the system to:
determine that a device has navigated to a website or application associated with a telecommunications network operator;
determine a user of the device,
wherein the user is registered with the telecommunications network operator;
determine that a trigger to display an advertisement has occurred;
retrieve an image of the user from a user profile maintained by the telecommunications network operator and associated with the user;
isolate a face of the user from the image;
create a personalized advertisement that includes the face of the user that has been isolated from the image; and
display the personalized advertisement on a display of the device.

13. The system of claim 12, wherein the image comprises at least one of:
a first image corresponding to a profile image of a user account associated with the user by the telecommunications network operator;
a second image collected from a social media account associated with the user profile; or
a third image collected by the telecommunications network operator and associated with the user profile.

14. At least one non-transitory computer-readable storage medium storing instructions, which, when executed by at least one processor of a system, cause the system to:
determine a location of a wireless device registered to a user by a telecommunications network operator,
wherein the wireless device is connected to a telecommunications network provided by the telecommunications network operator;
determine that a display separate from the wireless device is within a predetermined distance from the wireless device;
determine that a trigger to display an advertisement has occurred;
retrieve an image of the user from a user profile associated with the user by the telecommunications network operator;
isolate a face of the user from the image;
create a personalized advertisement that includes the face of the user that has been isolated from the image; and
display the personalized advertisement on the display.

15. The at least one non-transitory computer-readable storage medium of claim 14, wherein retrieving the image of the user from the user profile comprises generating the image such that the image includes a face that matches a likeness of the user based on information about the user from the user profile, wherein the face of the user comprises the face that matches the likeness of the user.
